# FASCICULE DE BREVET EUROPEEN

(11) **EP 2 220 976 B1**
(45) Date de publication et mention de la délivrance du brevet: **20.03.2013**
(21) Numéro de dépôt: 10356009.0
(22) Date de dépôt: 15.02.2010
(51) Int. Cl.: A47J 37/12

(54) **APPAREIL DE CUISSON COMPORTANT UN RECEPTACLE A ALIMENTS ET UN ELEMENT DE FILTRATION**
Küchengerät mit einem Lebensmittelgefäss und einen Filterelement
Kitchen appliance with a receptacle for food and a filter element

(30) Priorité: 18.02.2009 FR 0900743
(43) Date de publication de la demande: 25.08.2010
(73) Titulaire: Seb S.A., 69130 Ecully (FR)
(72) Inventeur: Pellerin, Olivier, 69300 Caluire et Cuire (FR); Seurat, Frédéric, 21490 Bretigny (FR); Payen, Jean-Marc, 21800 Quetigny (FR)
(74) Mandataire: Kiehl, Hubert

(56) Documents cités:
- EP-A- 1 488 722
- US-A- 2 635 527
- US-A- 2 716 938

## Description

La présente invention concerne le domaine technique des appareils de cuisson comportant une cuve, un réceptacle à aliments disposé dans ladite cuve, et un élément de filtration disposé dans ladite cuve sous le réceptacle à aliments.

La présente invention concerne notamment, mais non exclusivement, les friteuses électriques.

Le document EP 1 488 722 divulgue une friteuse électrique comportant un élément de filtration monté sous un élément chauffant agencé dans la cuve. La filtration du bain de cuisson est obtenue en retirant l'élément chauffant de la cuve. L'élément de filtration est monté amovible par rapport à l'élément chauffant. Une telle construction présente l'inconvénient de nécessiter des manipulations précises pour séparer l'élément chauffant et l'élément de filtration.

Le document DE 36 02 021 divulgue une friteuse électrique dans laquelle l'élément de filtration est agencé dans une cuve en dessous d'un élément chauffant, et dans laquelle un organe de préhension est prévu pour retirer l'élément de filtration indépendamment de l'élément chauffant. Toutefois cet organe de préhension s'étend à l'intérieur de la cuve à proximité d'une paroi latérale. Cette disposition ne permet pas de retirer aisément l'élément de filtration.

Les documents DE 37 44 205 et EP 1 842 469 divulguent des friteuses électriques dans lesquelles l'élément de filtration est agencé dans une cuve en dessous d'un élément chauffant, et dans lesquelles deux organes de préhension sont prévus pour retirer l'élément de filtration indépendamment de l'élément chauffant. Ces organes de préhension sont agencés à proximité de parois latérales opposées de la cuve et présentent des extrémités supérieures s'étendant hors de la cuve. Toutefois ces organes de préhension restent disposés au dessus de la cuve. Ces dispositions nécessitent l'utilisation des deux mains pour retirer l'élément de filtration et s'avèrent insuffisamment ergonomiques.

Un appareil selon le préambule de la revendication 1 est connu du document US 2 716 938.

Un but de la présente invention est de faciliter la filtration d'un bain de cuisson.

Un autre but de la présente invention est d'améliorer la sécurité d'un appareil permettant la filtration d'un bain de cuisson.

Ces buts sont atteints avec un appareil de cuisson d'aliments selon les caractéristiques de la revendication 1.

Ainsi l'utilisateur peut placer ses doigts parallèlement au bord supérieur de la cuve. Cette disposition permet de relever l'élément de filtration indépendamment du réceptacle, après avoir enlevé le réceptacle de la cuve. L'organe de préhension allongé facilite la préhension du réceptacle d'une seule main. L'autre organe de préhension allongé facilite la préhension de l'élément de filtration d'une seule main. Les opérations de cuisson et de filtration sont facilitées car l'utilisateur ne risque pas de confondre l'organe de préhension du réceptacle avec l'autre organe de préhension du dispositif de filtration.

Avantageusement, pour faciliter l'utilisation de l'appareil, l'autre organe de préhension s'étend en dessous de l'organe de préhension.

Avantageusement, pour une meilleure sécurité, l'autre organe de préhension est plus proche de la cuve que de l'organe de préhension.

Avantageusement encore, pour faciliter la préhension, l'autre organe de préhension présente une butée inférieure agencée à l'extérieur de l'anneau du côté de la cuve.

Avantageusement encore, pour une meilleure qualité de filtration, l'élément de filtration forme une cuvette.

Avantageusement encore, pour une meilleure qualité de filtration, l'élément de filtration présente des bords s'étendant à moins d'un cm des parois latérales de la cuve.

Selon une forme de réalisation avantageuse, la cuve est agencée dans un boîtier.

Selon une forme de réalisation avantageuse, l'appareil comporte une résistance électrique plongeante agencée dans la cuve en dessous du réceptacle.

Selon une forme de réalisation avantageuse, la résistance électrique plongeante est agencée au dessus de l'élément de filtration.

Avantageusement alors la résistance électrique plongeante est associée à un boîtier d'alimentation électrique disposé à l'extérieur de la cuve à l'opposé de l'autre organe de préhension.

L'invention sera mieux comprise à l'étude d'un exemple de réalisation, pris à titre nullement limitatif, illustré dans les figures annexées, dans lesquelles :
- la figure 1 est une vue en éclaté d'un exemple de réalisation d'un appareil de cuisson d'aliments selon l'invention,
- la figure 2 est une vue partielle en coupe de l'appareil assemblé illustré sur la figure 1.

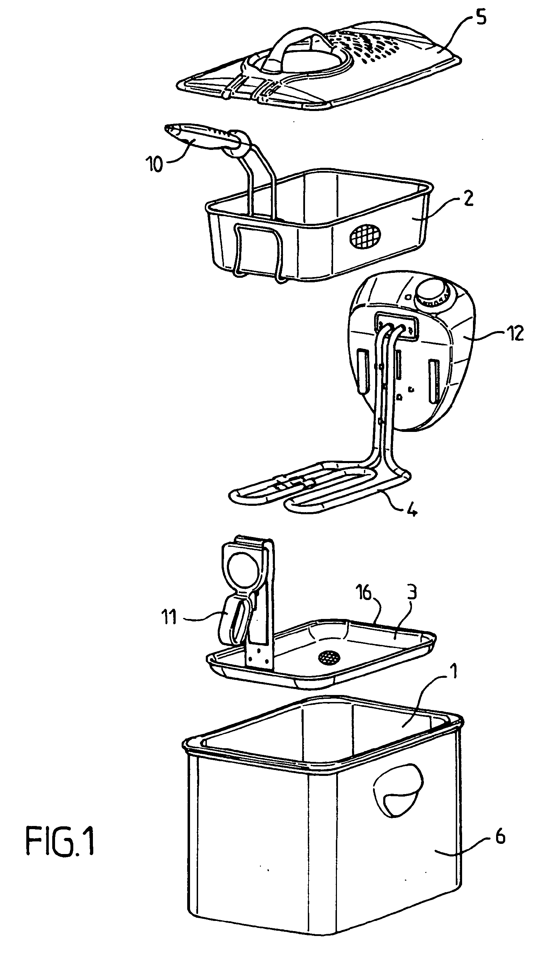

L'appareil de cuisson d'aliments illustré sur la figure 1 comporte une cuve 1 prévue pour recevoir un bain de cuisson, un réceptacle 2 prévu pour recevoir des aliments, un élément de filtration 3, une résistance électrique plongeante 4, un couvercle 5 et un boîtier 6. Cet appareil de cuisson est par exemple une friteuse.

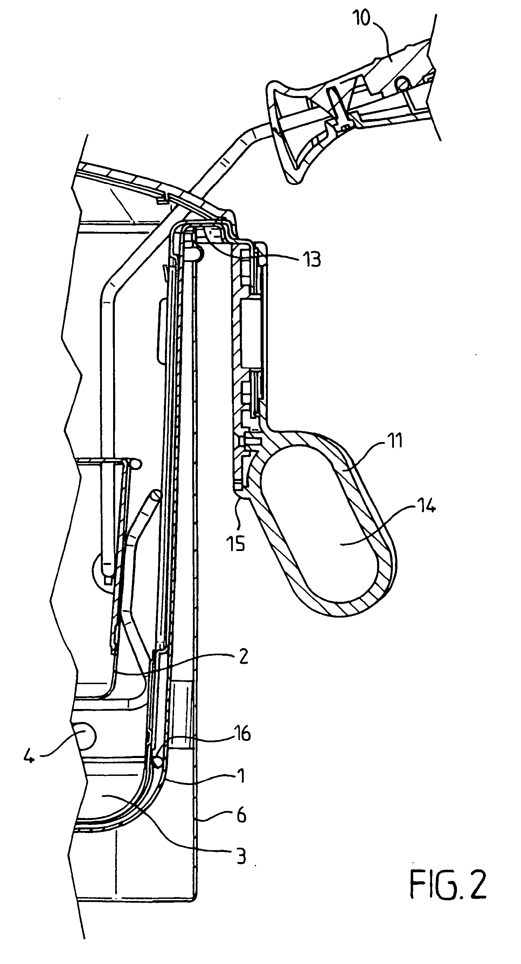

La cuve 1 est agencée dans le boîtier 6. Le réceptacle 2 est disposé de manière amovible dans la cuve 1. Le réceptacle 2 présente avantageusement des parois ajourées. Le réceptacle 2 présente par exemple des parois grillagées. Le réceptacle 2 est associé à un organe de préhension 10. Tel que bien visible sur les figures 1 et 2, l'organe de préhension 10 est allongé et s'étend longitudinalement à l'extérieur de la cuve 1 à partir du réceptacle 2. L'organe de préhension 10 allongé permet de soulever le réceptacle 2 d'une seule main.

L'élément de filtration 3 est disposé de manière amovible dans la cuve 1. L'élément de filtration 3 présente une paroi ajourée. L'élément de filtration 3 forme avantageusement une cuvette. L'élément de filtration 3 présente une perméabilité inférieure à la perméabilité du réceptacle 2. En d'autres termes l'écoulement du bain de cuisson est plus facile au travers du réceptacle 2 qu'au travers de l'élément de filtration 3. Cette disposition permet de retenir des débris d'aliments issus du réceptacle 2 dans l'élément de filtration 3. Le réceptacle 2 forme par exemple un tamis. L'élément de filtration 3 est associé à un autre organe de préhension 11. Tel que bien visible sur les figures 1 et 2, l'autre organe de préhension 11 est allongé et s'étend longitudinalement à l'extérieur de la cuve 1 à partir de l'élément de filtration 3. L'autre organe de préhension 11 allongé permet de soulever l'élément de filtration 3 d'une seule main.

La résistance électrique plongeante 4 est associée à un boîtier d'alimentation électrique 12. Lorsque la résistance électrique plongeante 4 est disposée dans la cuve 1 au dessus de l'élément de filtration 3, le boîtier d'alimentation électrique 12 est disposé à l'extérieur de la cuve 1 à l'opposé de l'autre organe de préhension 11.

Tel que visible sur la figure 2, la résistance électrique plongeante 4 est agencée dans la cuve 1 en dessous du réceptacle 2. La résistance électrique plongeante 4 est agencée au dessus de l'élément de filtration 3. L'élément de filtration 3 s'étend sous le réceptacle 2. L'organe de préhension 10 s'étend à l'extérieur de la cuve 1 lorsque le réceptacle 2 est disposé dans la cuve 1. L'autre organe de préhension 11 s'étend à l'extérieur de la cuve 1 lorsque l'élément de filtration 3 est disposé dans la cuve 1.

Plus particulièrement, l'autre organe de préhension 11 s'étend hors de la cuve 1 en dessous d'un bord supérieur 13 de la cuve 1 et à distance de l'organe de préhension 10. Tel que bien visible sur la figure 2, l'autre organe de préhension 11 s'étend en dessous de l'organe de préhension 10.

Selon la forme de réalisation préférée illustrée sur les figures, l'autre organe de préhension 11 est plus proche de la cuve 1 que de l'organe de préhension 10. L'autre organe de préhension 11 forme un anneau 14 prévu pour l'introduction d'au moins deux doigts. L'anneau 14 ménage un passage s'étendant transversalement. En d'autres termes l'utilisateur peut placer ses doigts parallèlement au bord supérieur 13 de la cuve 1. L'autre organe de préhension 11 présente une butée inférieure 15 agencée à l'extérieur de l'anneau 14 du côté de la cuve 1. L'élément de filtration 3 présente des bords 16 s'étendant à moins d'un cm des parois latérales de la cuve 1, pour mieux retenir les débris d'aliments.

L'appareil de cuisson d'aliments selon l'invention fonctionne et s'utilise de la manière suivante. L'utilisateur peut procéder à la filtration du bain de cuisson présent dans la cuve 1 en relevant l'élément de filtration 3 à l'aide de l'autre organe de préhension 11, après avoir retiré le réceptacle 2 et la résistance électrique plongeante 4. L'autre organe de préhension 11 s'étendant à proximité de la cuve 1 ne gêne pas l'utilisateur pendant les opérations de cuisson tout en permettant de faciliter la filtration du bain de cuisson après utilisation. L'autre organe de préhension 11 permet d'indiquer la présence de l'élément de filtration 3 dans la cuve 1.

L'autre organe de préhension 11 incliné selon une direction principalement verticale permet à l'utilisateur d'exercer un effort de préhension efficace sans tension excessive au niveau du poignet. Le relevage de l'élément de filtration 3 au travers du bain de cuisson est ainsi facilité.

A titre de variante, l'appareil de cuisson d'aliments selon l'invention ne comporte pas nécessairement une résistance électrique plongeante et/ou un boîtier.

La présente invention n'est nullement limitée à l'exemple de réalisation décrit, mais englobe de nombreuses modifications dans le cadre des revendications.

## Revendications

1. Appareil de cuisson d'aliments comportant une cuve (1) prévue pour recevoir un bain de cuisson, un réceptacle (2) prévu pour recevoir des aliments, ledit réceptacle (2) étant disposé de manière amovible dans la cuve (1) et étant associé à un organe de préhension (10) allongé s'étendant longitudinalement à l'extérieur de la cuve (1) à partir du réceptacle (2), un élément de filtration (3) étant disposé de manière amovible dans la cuve (1), ledit élément de filtration (3) s'étendant sous ledit réceptacle (2), ledit élément de filtration (3) étant associé à un autre organe de préhension (11) s'étendant hors de la cuve (1) en dessous d'un bord supérieur (13) de la cuve (1) et à distance de l'organe de préhension (10), **caractérisé en ce que** l'autre organe de préhension (11) forme un anneau (14) prévu pour l'introduction d'au moins deux doigts pour relever l'élément de filtration (3), l'anneau (14) ménageant un passage s'étendant transversalement de sorte que l'utilisateur peut placer ses doigts parallèlement au bord supérieur (13) de la cuve (1).

2. Appareil de cuisson d'aliments selon la revendication 1, **caractérisé en ce que** l'autre organe de préhension (11) s'étend en dessous de l'organe de préhension (10).

3. Appareil de cuisson d'aliments selon la revendication 2, **caractérisé en ce que** l'autre organe de préhension (11) est plus proche de la cuve (1) que de l'organe de préhension (10).

4. Appareil de cuisson d'aliments selon l'une des revendications 1 à 3, **caractérisé en ce que** l'autre organe de préhension (3) présente une butée inférieure (15) agencée à l'extérieur de l'anneau (14) du côté de la cuve (1).

5. Appareil de cuisson d'aliments selon l'une des revendications 1 à 4, **caractérisé en ce que** l'élément de filtration (3) forme une cuvette.

6. Appareil de cuisson d'aliments selon l'une des revendications 1 à 5, **caractérisé en ce que** l'élément de filtration (3) présente des bords (16) s'étendant à moins d'un cm des parois latérales de la cuve (1).

7. Appareil de cuisson d'aliments selon l'une des revendications 1 à 6, **caractérisé en ce que** la cuve (1) est agencée dans un boîtier (6).

8. Appareil de cuisson d'aliments selon l'une des revendications 1 à 7, **caractérisé en ce qu'**il comporte une résistance électrique plongeante (4) agencée dans la cuve (1) en dessous du réceptacle (2).

9. Appareil de cuisson d'aliments selon la revendication 8, **caractérisé en ce que** la résistance électrique plongeante (4) est agencée au dessus de l'élément de filtration (3).

10. Appareil de cuisson d'aliments selon l'une des revendications 8 ou 9, **caractérisé en ce que** la résistance électrique plongeante (4) est associée à un boîtier d'alimentation électrique (12) disposé à l'extérieur de la cuve (1) à l'opposé de l'autre organe de préhension (11).

## Claims

1. A cooking apparatus comprising a bowl (1) for receiving a cooking bath, and a receptacle (2) for receiving food, said receptacle (2) being removably arranged in the bowl (1) and being associated with an elongated gripping member (10) extending longitudinally outside the bowl (1) from the receptacle (2), a filtering element (3) being removably arranged in the bowl (1), said filtering element (3) extending under said receptacle (2), said filtering element (3) being associated with another gripping member (11) extending out of the bowl (1) below an upper edge (13) of the bowl (1) and at a distance from the gripping member (10), **characterised in that** the other gripping member (11) forms a ring (14) for introducing at least two fingers to lift the filtering element (3), the ring (14) providing a passage extending transversally such that the user can place his/her fingers parallel to the upper edge (13) of the bowl (1).

2. A cooking apparatus according to claim 1, **characterised in that** the other gripping member (11) extends below the gripping member (10).

3. A cooking apparatus according to claim 2, **characterised in that** the other gripping member (11) is closer to the bowl (1) than the gripping member (10).

4. A cooking apparatus according to claims 1 to 3, **characterised in that** the other gripping member (3) has a lower stop (15) arranged outside the ring (14) on the side of the bowl (1).

5. A cooking apparatus according to one of claims 1 to 4, **characterised in that** the filtering element (3) forms a tray.

6. A cooking apparatus according to claims 1 to 5, **characterised in that** the filtering element (3) has edges (16) extending at least by 1 cm from the lateral walls of the bowl (1).

7. A cooking apparatus according to one of claims 1 to 6, **characterised in that** the bowl (1) is arranged in a housing (6).

8. A cooking apparatus according to one of claims 1 to 7, **characterised in that** it contains an immersion heating element (4) arranged in the bowl (1) below the receptacle (2).

9. A cooking apparatus according to claim 8, **characterised in that** the immersion heating element (4) is arranged above the filtering element (3).

10. A cooking apparatus according to one of claims 8 or 9, **characterised in that** the immersion heating element (4) is associated with an electrical power supply unit (12) arranged outside the bowl (1) opposite the other gripping member (11).

## Patentansprüche

1. Gerät zum Garen von Lebensmitteln, umfassend ein Gefäß (1), das für die Aufnahme eines Garbades vorgesehen ist, und ein Behältnis (2), das zum Aufnehmen der Lebensmittel vorgesehen ist, wobei das Behältnis (2) herausnehmbar im Gefäß (1) angeordnet ist und mit einem länglichen Griffelement (10) verbunden ist, das sich ausgehend vom Behältnis (2) der Länge nach außerhalb des Gefäßes (1) erstreckt, wobei ein Filterelement (3) herausnehmbar im Gefäß (1) angeordnet ist, wobei sich das Filterelement (3) unter dem Behältnis (2) erstreckt, wobei das Filterelement (3) mit einem weiteren Griffelement (11) verbunden ist, das sich aus dem Gefäß (1) unterhalb eines oberen Randes (13) des Gefäßes (1) und vom Griffelement (10) beabstandet erstreckt, **dadurch gekennzeichnet, dass** das weitere Griffelement (11) einen Ring (14) bildet, der zum Einführen von wenigstens zwei Fingern vorgesehen ist, um das Filterelement (3) anzuheben, wobei der Ring (14) einen Durchgang ausbildet, der sich quer erstreckt, so dass der Benutzer seine Finger parallel zum oberen Rand (13) des Gefäßes (1) einfügen kann.

2. Gerät zum Garen von Lebensmitteln nach Anspruch 1, **dadurch gekennzeichnet, dass** sich das weitere Griffelement (11) unterhalb des Griffelements (10) erstreckt.

3. Gerät zum Garen von Lebensmitteln nach Anspruch 2, **dadurch gekennzeichnet, dass** das weitere Griffelement (11) näher am Gefäß (1) ist als das Griffelement (10).

4. Gerät zum Garen von Lebensmitteln nach einem der Ansprüche 1 bis 3, **dadurch gekennzeichnet, dass** das weitere Greifelement (3) einen unteren Anschlag (15) aufweist, der außerhalb des Ringes (14) auf Seite des Gefäßes (1) angeordnet ist.

5. Gerät zum Garen von Lebensmitteln nach nach einem der Ansprüche 1 bis 4, **dadurch gekennzeichnet, dass** das Filterelement (3) eine Tasse bildet.

6. Gerät zum Garen von Lebensmitteln nach einem der Ansprüche 1 bis 5, **dadurch gekennzeichnet, dass** das Filterelement (3) Ränder (16) aufweist, die sich wenigstens einen cm von den Seitenwänden des Gefäßes (1) erstrecken.

7. Gerät zum Garen von Lebensmitteln nach einem der Ansprüche 1 bis 6, **dadurch gekennzeichnet, dass** das Gefäß (1) in einem Gehäuse (6) angeordnet ist.

8. Gerät zum Garen von Lebensmitteln nach einem der Ansprüche 1 bis 7, **dadurch gekennzeichnet, dass** es ein elektrisches Tauchheizelement (4) umfasst, das im Gefäß (1) unterhalb des Behältnisses (2) angeordnet ist.

9. Gerät zum Garen von Lebensmitteln nach Anspruch 8, **dadurch gekennzeichnet, dass** das elektrische Tauchheizelement (4) über dem Filterelement (3) angeordnet ist.

10. Gerät zum Garen von Lebensmitteln nach einem der Ansprüche 8 oder 9, **dadurch gekennzeichnet, dass** das elektrische Tauchheizelement (4) mit einem Stromversorgungsgehäuse (12) verbunden ist, das außerhalb des Gefäßes (1) gegenüber dem weiteren Griffelement (11) angeordnet ist.
